Europäisches Patentamt

European Patent Office

Office européen des brevets

(19)

(11) Veröffentlichungsnummer: **0 087 588**

**A1**

(12) # EUROPÄISCHE PATENTANMELDUNG

(21) Anmeldenummer: **83100784.4**

(22) Anmeldetag: **28.01.83**

(51) Int. Cl.³: **A 01 F 25/20**

(30) Priorität: **29.01.82 DE 3202992**

(43) Veröffentlichungstag der Anmeldung:
**07.09.83 Patentblatt 83/36**

(84) Benannte Vertragsstaaten:
**AT BE CH DE FR GB IT LI LU NL SE**

(71) Anmelder: **BUSATIS-WERKE GmbH u. Co KG**
**Kölner Strasse 61**
**D-5630 Remscheid 11(DE)**

(72) Erfinder: **Biller, Bernd**
**Hörather Strasse 135a**
**D-5600 Wuppertal(DE)**

(54) Aufnahme- und Verteilungseinrichtung verfestigten Rauhfutters und Streumaterials.

(57) Verfestigtes Rauhfutter aus Haufen (52), Preßballen (11) oder Silageblöcken muß in der Landwirtschaft aufgenommen und portionsweise an Freßplätzen und dergleichen zur Ablage gebracht werden.

Durch die Erfindung wird ein im Aufwand gering liegendes Zusatzgerät zu Frontladern an Schleppern (1) in Vorschlag gebracht, mit dem das verfestigte Rauhfutter, aber auch Einstreu wie Stroh und dergleichen, mit den Zinken (12) aufgenommen und an der Vorderseite portionsweise mittels auf- und abbewegter Schneidwerke (8) abgetrennt wird, wobei nach erfolgter Abtrennung das Gut durch Abschiebegabeln oder durch Auflage auf dem Erdreich und Zurückfahren mit dem Schlepper um die Portionsstärke nach vorne gebracht wird, um so den nächsten Schnitt an dem Platz ausführen zu können, an dem die Portion benötigt wird.

Fig 1

EP 0 087 588 A1

Busatis-Werke GmbH & Co KG
Remscheid-Lennep

<u>Aufnahme- und Verteilungseinrichtung
verfestigten Rauhfutters und Streumaterials</u>

Die Erfindung bezieht sich auf Aufnahme- und Verteilungseinrichtungen, die an Front- oder Heckladern
der Fahrzeuge, wie Schlepper, angebaut werden und
mit denen Rauhfutter und Einstreu, wie Heu, Stroh,
Silage und dergleichen, aufgenommen und zur Fütterung und Einstreu transportiert wird.

Solche Einrichtungen dienen dem Zweck, die Aufnahme
und Fütterung mit Rauhfutter sowie das Einstreuen dieser Güter, die als Großbund- oder quaderförmige
Preßballen bzw. als Silohaufen vorliegen, in der
Landwirtschaft zu vereinfachen und zu beschleunigen.

Bei einer bereits bekanntgewordenen Einrichtung
wird ein Großrundballen in einen Fütterungswagen
eingelegt, indem er unten mit seinem Umfang auf
einem Kratzboden aufliegt, wobei bei Einschaltung
des Kratzbodens der Rundballen in Drehbewegung versetzt wird und wobei vom äusseren Bereich durch ein
an den Ballen entsprechend angesetztes Schneidwerk
kontinuierlich eine Schicht abgetrennt wird, welche
auf den Fütterungstisch gelangt.

Nachteilig ist hierbei, daß der Fütterungswagen sehr
umfangreich ist und hoch im Anschaffungspreis liegt

0087588

und zudem nur für die Verfütterung von Rundballen geeignet ist; er kann daher eine große Verbreitung nicht erfahren.

Bei einer anderen bekannten Einrichtung ähnlicher Art wird ein Rundballen senkrecht auf einen Drehtisch gestellt und oberhalb des Rundballens wird ein Schneidwerk an einer senkrechten Säule so angebracht, daß es auf- und abbewegt werden kann, und daß hierbei vom Rundballen jeweils ein Abschnitt abgetrennt wird.

Mit dieser Einrichtung können hilfsweise zwar auch andere, wie beispielsweise Großpreßballen, die sogenannten Bigballers, verarbeitet werden; jedoch bestehen bei diesen Einrichtungen auch besondere Nachteile, so z.B. daß sie nur stationär verwendet werden können, also das abgeschnittene Material nicht portionsweise in den Stallungen und dergleichen dort abgelegt wird, wo es benötigt wird, und außerdem sind auch diese Einrichtungen mit eigenem Antrieb sehr aufwendig und nur für diesen einen Verwendungszweck geeignet.

Es sind noch andere Spezialfütterungswagen bekannt geworden, so z.B. solche, in die kleinere Preßballen eingebracht, die hier zerkleinert werden und dann mit anderem Futter, wie beispielsweise Kraftfutter, zu einer homogenen Futtermasse vermischt werden, wobei dann das vermischte Material kontinuierlich ausfließt. Auch diese Fütterungswagen sind zu aufwendig und nur einseitig zu verwenden, vor allen Dingen eignen sie sich nicht für die Verarbeitung der immer mehr angewandten Großballen der verschiedenen Formen bzw. anfallenden schweren Siloblocks.

Aufgabe der Erfindung ist es, eine im Aufwand niedrig liegende Aufnahme- und Verteilungseinrichtung vorzuschlagen, die universell verwendbar ist, eine hohe Arbeitseffektivität bietet, hierbei auch die Transportarbeiten übernimmt und die vorzugsweise mit den in landwirtschaftlichen Betrieben bereits vorhandenen Schleppern mit Front- oder Heckladern betrieben werden kann und mit der jedes gepreßte oder verfestigte Gut aus Heu, Halbheu, Gras, Stroh, das als Ballen, Blöcken, Haufen und dergleichen, in verschiedener Größe und Form vorliegt, gegebenenfalls abtrennt, aufnimmt und in verlangten Portionsgrößen teilt sowie diese an den gewünschten Stellen ablegt.

Diese Aufgabe wird im wesentlichen erfindungsgemäß dadurch gelöst, daß die Aufnahme- und Verteilungseinrichtungen als Zusatzgeräte vorzugsweise an Front- oder Heckladern von Schleppern angebaut werden, ihre Trenn-, Schneid- oder Zerreißwerkzeuge wie z.B. Mähschneidwerke bzw. Zerreißwalzen oder dergleichen, so höhenverschwenk- oder -verschiebbar angeordnet werden, daß das vom Frontlader mittels seiner Gabeln aufgenommene bzw. unterstochene und aus dem Haufen durch Absenken der Schneidwerkzeuge getrennte Gut vorn in einer Portionsgröße abgeschnitten bzw. abgetrennt werden kann, wobei das Gut durch Absetzen auf der Erde und entsprechendem Zurückfahren mit dem Fahrzeug oder durch Vorschubeinheiten, wie mittels der an sich bekannten Abschiebegabeln, jeweils um die Portionsgröße nach jeder Ab- und Aufbewegung der Trenn-, Schneid- oder Zerreißwerkzeuge vorgeschoben wird, wobei das Abtrennen jeder Portion an einem anderen, gewünschten Platz vorgenommen werden kann.

Besonders vorteilhaft ist es für die Fütterung in Ställen mit einem befahrbaren Futtergang, wenn in weiterer Ausgestaltung der Erfindung vorn unter dem Bereich, in dem die abgetrennte Portion herunterfällt, eine Futterleitvorrichtung mittels bekannter Schnellverschlüsse angebaut wird, die das Futter in Ställen mit beidseitiger Fütterung nach jeder Seite und in Ställen mit einseitiger Fütterung nach einer Seite zur Ablage, z.B. direkt in den Futtertrog, lenkt.

Diese Futterleitvorrichtung kann z.B. eine einfache Futterrutsche sein oder ein über einen Hydromotor oder dergleichen angetriebenes, sogenanntes Querförderband, welches durch reversierbaren Antrieb auch die Möglichkeit bietet, auf einem beidseitigen Futtergang das Futter nach links und rechts abzulegen.

Vorzugsweise wird erfindungsgemäß so vorgegangen, daß das Schneidwerk ein Doppelmesser mit zwei hin- und hergehenden Messern angewandt wird.

Zum bequemen und schnellen An- und Abbau der Aufnahme- und Verteilungseinrichtung wird weiter vorgeschlagen, diese mit leicht entfernbaren Stützen, z.B. als Schwenkstützen auszurüsten, die für das Abstellen fest arretiert auf dem Boden stehen und nach dem Anbau hochgeschwenkt und in dieser Stellung gehaltert werden.

Die Schneid- bzw. Zerreißwerkzeuge können erfindungsgemäß auch an Parallelogrammhöhenschwenkgestängen angeordnet werden, wodurch sie stets während des gesamten Schnittweges in gleicher Winkellage zum zu schneidenden Gut stehen.

Um einen gerade verlaufenden Schnittweg zu erreichen, was zum Eintauchen bzw. Schnitt in stärker bzw. sehr verfestigtem Gut Vorteile bietet, wird nach einer weiteren Ausgestaltung der Erfindung vorgeschlagen, die Schneid- bzw. Reißwerkzeuge an einem, in einer Geradführung höhenmäßig bewegbaren Gestell, anzuordnen.

Zur Verwendung der Aufnahme- und Verteilungseinrichtung auch zum Herausnehmen einer zu verteilenden Ladung aus einem Haufen bzw. Fahrsilo kann erfindungsgemäß ein Schneidwerk an der Vorderseite und eines an einer Außenseite oder es können jeweils an den Außenseiten ein Schneidwerk vorgesehen werden, wobei die Antriebe, Motore und Getriebeteile und dergleichen, außerhalb des zu schneidenden Gutes liegen können und die Messer über schmale Hebeleinrichtungen bzw. Gestelle hin- und herbewegt werden, wie es in ähnlicher Weise z.B. von seitlichen Abtrennschneidwerkzeugen zum Rapsmähen bei Schwadmähern, Mähdreschern und dergleichen oder bei Weinlaubmähern bekannt geworden ist.

Die Klingen der Schneidwerkzeuge werden in erfindungsgemäß vorteilhafter Weise vorn spitz ausgeführt, wobei bei Doppelmesserschneidwerken alle Klingen eines Messers oder ein Teil dieser, den Klingen des anderen Messers gegenüber etwas länger, z.B. etwa 2 bis 8 mm, ausgeführt sein können, um Steine oder sonstige feste Fremdkörper im Gut aus dem Schnitt verschieben zu können.

Die mit der Erfindung erzielten Vorteile bestehen insbesondere darin, daß mit einem preiswerten Zusatzgerät zum vorhandenen Front- oder Hecklader und Schlepper alle Rauhfutterarten, Einstreu,wie Stroh und dergleichen, in den verschiedensten Formen und Abmessungen gepreßter oder andersartig verfestigter Gebinde einschließlich zu entnehmender Ladungen aus Haufen wie Silos und dergleichen, an beliebiger Stelle innerhalb des landwirtschaftlichen Betriebes auf- bzw. herausgenommen, transportiert und in schneller und bequemer Weise bzw. wie es die Fütterung verlängt, portionsweise nach vorn, beidseitig oder einseitig, ohne große Manövriertätigkeit an verschiedenen Plätzen zur Ablage gelangen können.

Die Erfindung wird durch die Figuren, die Beschreibung hierzu, sowie die Patentansprüche noch näher erläutert. In den Figuren sind Ausführungsbeispiele schematisch dargestellt, es zeigt

Figur 1 das Vorderteil eines Schleppers mit Frontlader und angebautem Erfindungsgegenstand, wobei als Schneidwerk ein Doppelmesser verwendet ist,

Figur 2 eine Draufsicht gemäß Figur 1,

Figur 3 eine Seitenansicht auf den Erfindungsgegenstand mit eingebauter Fräswalze und angebrachter Futterleitvorrichtung,

Figur 4 eine Ansicht gemäß Pfeilrichtung Z nach Figur 3,

Figur 5 eine Ansicht gemäß Pfeilrichtung Z nach Figur 3, jedoch mit Querförderband,

Figur 6 eine Seitenansicht auf eine erfindungsgemäße Vorrichtung, bei der vorn und seitlich Schneidwerke vorgesehen sind und diese in gerader Bewegungsbahn geführt sind,

Figur 7 eine Draufsicht gemäß Figur 6.

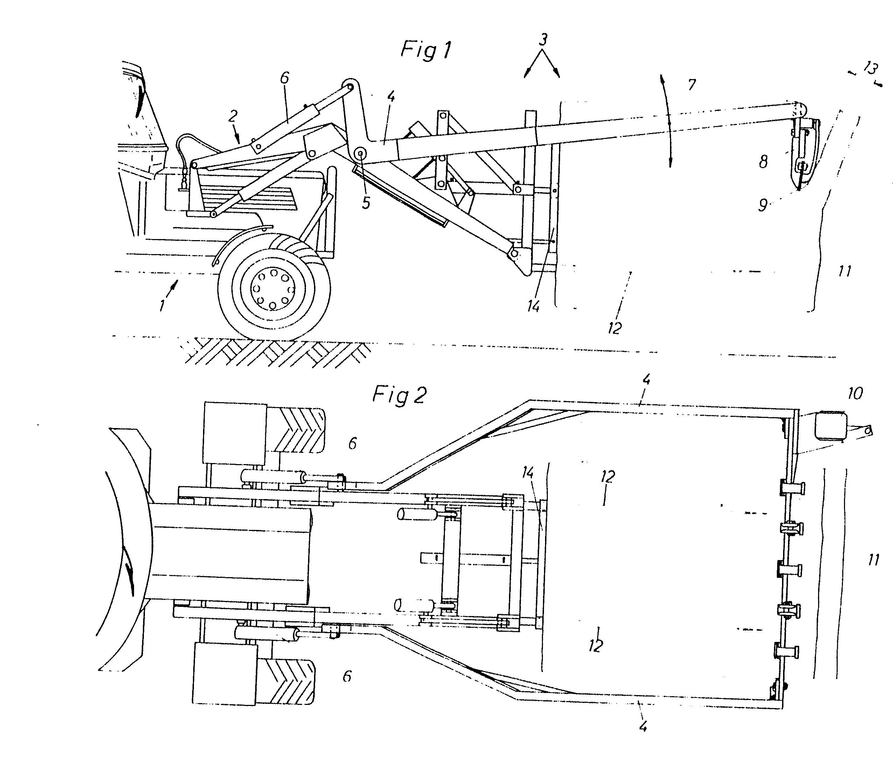

Am Schlepper 1 ist ein Frontlader 2 angebaut und an ihm ist die Aufnahme- und Verteilungseinrichtung 3 angeordnet, und zwar derartig, daß die Höhenschwenkgabel 4 um die Achse 5 schwenkbar gelagert ist und die Höhenschwenkgabel 4 über den Hydrobeweger 6 in Pfeilrichtung 7 auf- und abgeschwenkt werden kann. An der Frontseite der Höhenschwenkgabel 4 ist ein Doppelmesserschneidwerk 8 mit zwei hin- und hergehenden Messern 9 angebaut, das über den Antrieb 1o

mittels Hydromotor oder dergleichen betrieben wird.
Der Antrieb 1o liegt außerhalb des in der Zeichnung
dargestellten Gutes, hier ein Wickelbalken 11, der
mittels der Ladegabel 12 des Frontladers 2 aufgenommen
wurde. In der in Figur 1 dargestellten Position ist das
Doppelmesserschneidwerk 8 durch Herabschwenken der Höhenschwenkgabel 4 bereits im oberen Bereich in den Rundballen eingedrungen und schneidet eine Schicht in der
Dicke 13 beim weiteren Herabschwenken.

Nach dem endgültigen Abschneiden dieser Schicht, welches
an dem Platz erfolgt, an dem diese Schicht benötigt wird,
beispielsweise in der Nähe des Freßgitters, schwenkt
das Doppelmesserschneidwerk 8 über die Höhenschwenkgabel 4 wieder nach oben, bis es außerhalb des Bereichs
des Ballens 11 liegt und mittels der an sich bekannten
Abschiebegabel 14 des Frontladers 2 wird der Ballen 11
um die Dicke 13 des später abzutrennenden Gutanteils
nach vorne geschoben und der Schlepperfahrer kann mit
seiner Maschinenkombination an die Stelle fahren, an
der die nächste Portion zur Ablage gelangen soll und
trennt dann die nächste Portion ab.

Mittels der Ladegabel 12 können in gleicher Weise
anstelle des Rundballens 11 andere Rauhfutterpakete
oder Strohballen bzw. Silageblöcke aufgenommen bzw.
aufgeladen werden.

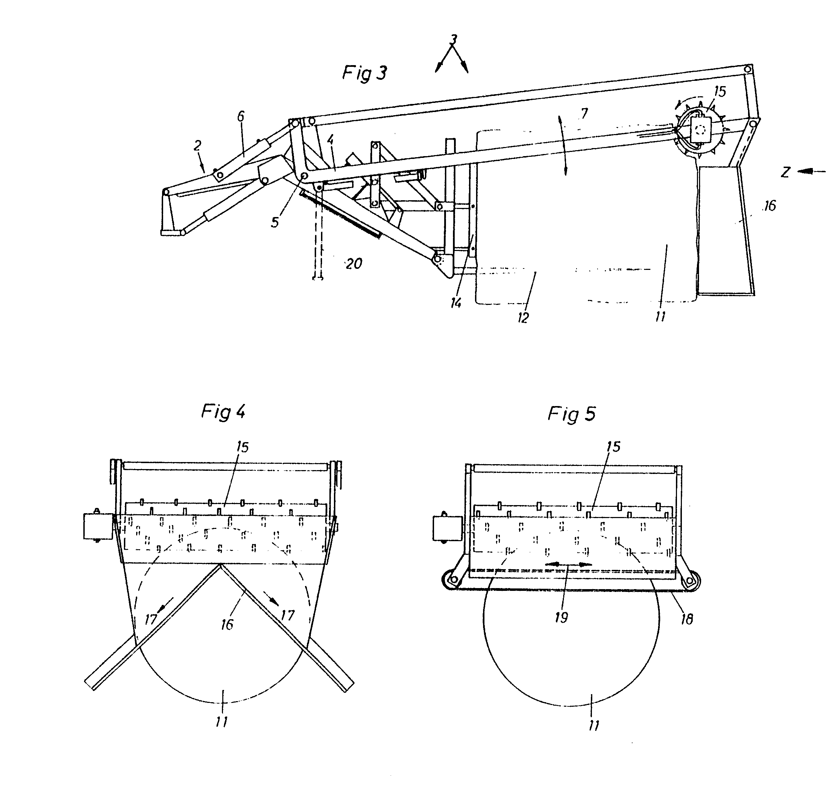

Beim Ausführungsbeispiel gemäß den Figuren 3 und 4
ist anstelle eines Schneidwerks eine Zerreißtrommel
15 angebaut, wobei das Arbeitsverfahren in gleicher
Weise, wie es im Ausführungsbeispiel gemäß den Figuren
1 und 2 beschrieben wurde, erfolgt. Unterhalb der Zerreißtrommel 15 ist die Futterleitvorrichtung 16 angeordnet, die gemäß Figur 4 das abgerissene Gut in Pfeilrichtung 17 zur Ablage bringt. Die Futterleitvorrichtung 16 ist über Schnellverschlüsse in bekannter Weise mit der Aufnahme- und Verteilungseinrichtung 3 verbunden und kann zur einseitigen Ablage entsprechend einer einzigen Schräglenkplatte ausgerüstet sein.

In Figur 5 ist unterhalb der Zerreißtrommel 15 ein Querförderband 18 angeordnet, das in beiden Richtungen des Doppelpfeils 19 angetrieben werden kann, so daß das abgerissene Gut nach rechts oder links zur Ablage gebracht werden kann.

Mit den Stellstützen 2o wird die Aufnahme- und Verteilungseinrichtung 3 zum An- und Abbau so placiert, daß mit dem Frontlader in diese hineingefahren und der Anbau bequem durchgeführt werden kann.

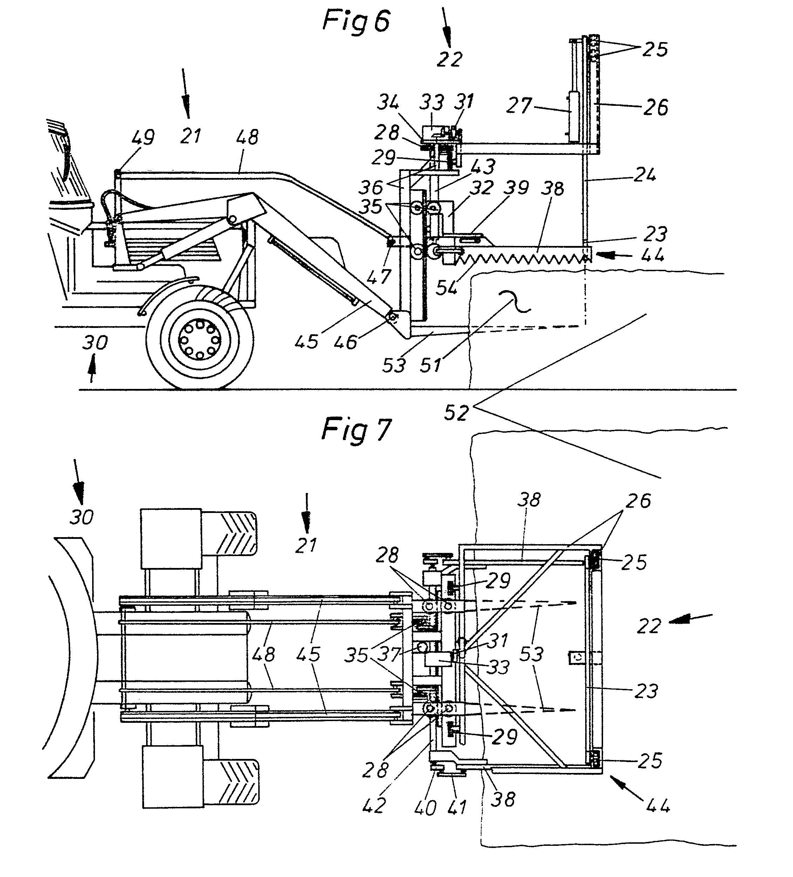

Am Frontlader 21 gemäß den Figuren 6 und 7 weist die Aufnahme- und Verteilungseinrichtung 22 ein vorderes Schneidwerk 23 auf, das mit seinem Traggestell 24 und dieses über seine beiden Rollenpaare 25 im Führungsrahmen 26 etwa senkrecht auf- und abbewegbar gelagert ist, wobei diese Bewegung beispielsweise über einen Hydrobeweger 27 eingeleitet wird. Der Führungsrahmen 26 ist mittels der Rollenpaare 28 und 29 quer zur Fahrtrichtung des Schleppers 3o leicht beweglich verschiebbar angeordnet und wird zur hin- und hergehenden Bewegung des Messers des Schneidwerks 23 über die Kurbel 31, die vom Getriebe 33 in Drehung versetzt wird, angetrieben, wobei das Getriebe 33 fest an der Konsole 34 angeschlossen ist, welche am Halterahmen 36 befestigt ist. Am Schlittengestell 32 sind die Führungsschienen 39 angeordnet.

Diese sind über die Rollenpaare 35 am Grundrahmen 36 höhenverfahrbar angeordnet, beispielsweise über den Hydrobeweger 37. Die beiden Seitenmesser 38 sind in der Führungsschiene 39 in ihrer Längsrichtung hin- und herbeweglich gelagert und werden von der Kurbel 4o über die Pleuelstangen 41 angetrieben.

Die Welle 42 der Kurbel 4o wird über eine senkrecht stehende Welle 43 des Getriebes 33 und einem mit ihr in fester Drehverbindung stehenden, nicht dargestellten Getriebe synchron mit der Kurbel 31 so angetrieben, daß das vordere Schneidwerk mit den Seitenmessern an den Ecken 44 bei Überschneidung der Schnittflächen nicht kollidiert, wodurch ein freies Ausschneiden an den Ecken erreicht ist.

Der Grundrahmen 36 ist mit der Frontladerschwinge 45, über deren Schwenkaugen 46, seinen Schwenklagern 47, den Lenkern 48 und den Schwenklagern 49 der Frontladerschwinge 45 parallelogrammartig angeschlossen, so daß die Aufnahme- und Verteilungseinrichtung 22 bei allen Stellungen der Frontladerschwinge 45 etwa eine senkrechte Lage seiner Schneidwerke aufweist.

Bei der Entnahme einer Portion 51 Gut aus dem Haufen 52 wird mit der Gerätekombination mittels der Zinken 53 in den Haufen gestochen und die angetriebenen Schneidwerke über ihre Hydrobeweger 27, 37 abwärts bewegt, bis sich die Schneidwerke in Höhe der Zinken 53 befinden. Anschließend wird die Portion 51 durch Anheben der Frontladerschwinge 45 aus dem Haufen 52 herausgerissen und dorthin transportiert, wo Gut in kleineren Portionen abgegeben werden soll. Das geschieht z.B. dadurch, daß das vordere Schneidwerk hochgefahren, der Haufen auf den Boden gelegt und mit dem Schlepper um die Dicke der kleinen Portion nach hinten gefahren wird, wodurch die Portion vorn über das vordere Schneidwerk 23 übersteht. Sodann wird das vordere Schneidwerk 23 nach unten gefahren und trennt eine kleine Portion ab.

Als Schneidwerke können bei den Ausführungsbeispielen mit vorderen und seitlichen Schneidwerkzeugen Doppel- oder Mulchschneidwerke angewandt werden, wobei die Messer mit spitzen Klingen oder als sägeartige Messer, wie die Zähne 54 der Seitenmesser, ausgebildet sein können.

Busatis-Werke GmbH & Co KG
Remscheid-Lennep

PATENTANSPRÜCHE

1. Aufnahme- und Verteilungseinrichtung verfestigten Rauhfutters und Streumaterials, dadurch gekennzeichnet, daß die Aufnahme- und Verteilungseinrichtungen als Zusatzgeräte vorzugsweise an Front- oder Heckladern (2) von Schleppern (1) angebaut werden, ihre Trenn-, Schneid- oder Zerreißwerkzeuge wie z.B. Mähschneidwerke (8) bzw. Zerreißwalzen (15) oder dergleichen, so höhenverschwenkbar oder -verschiebbar angeordnet werden, daß das vom Frontlader (2) mittels seiner Gabeln (12) aufgenommene bzw. unterstochene und aus dem Haufen durch Absenken der Schneidwerkzeuge getrennte Gut vorn in einer Portionsgröße (13, 16) abgeschnitten bzw. abgetrennt werden kann, wobei das Gut durch Absetzen auf der Erde und entsprechendem Zurückfahren mit dem Fahrzeug (1) oder durch Vorschubeinheiten, wie mittels der an sich bekannten Abschiebegabeln (14), jeweils um die Portionsgrößen (13, 16) nach jeder Ab- und Aufbewegung der Trenn-, Schneid- oder Zerreißwerkzeuge vorgeschoben wird, wobei das Abtrennen jeder Portion an einem anderen, gewünschten Platz vorgenommen werden kann.

2. Aufnahme- und Verteilungseinrichtung nach Anspruch 1, dadurch gekennzeichnet, daß unter dem Bereich der herunterfallenden, abgetrennten Portion des Gutes (11) eine nach einer Seite oder beiden Seiten wirkende Futterleitvorrichtung (16) oder ein sogenanntes Querförderband (18) über Schnellverschlüsse angeordnet wird, das wahlweise im Rechts- oder Linkslauf betrieben werden kann.

3. Aufnahme- und Verteilungseinrichtung nach Anspruch 1 und 2, dadurch gekennzeichnet, daß als Schneidwerk oder -werke Doppelmesser (8) mit zwei hin- und hergehenden Messern (9) angewandt sind.

4. Aufnahme- und Verteilungseinrichtung nach Anspruch 1, dadurch gekennzeichnet, daß an ihr leicht entfernbare Stellstützen (2o) angebracht sind.

5. Aufnahme- und Verteilungseinrichtung nach Anspruch 1 und 2, dadurch gekennzeichnet, daß die Schneid- (8) bzw. Reißwerkzeuge (15) an Parallelogrammhöhenschwenkgestängen angeordnet sind.

6. Aufnahme- und Verteilungseinrichtung nach Anspruch 1 und 2, dadurch gekennzeichnet, daß die Schneid- bzw. Reißwerkzeuge ( 8 , 15 ) an einem, in einer Geradführung ( 39 ) höhenmäßig bewegbaren Gestell ( 26 ) angeordnet sind.

7. Aufnahme- und Verteilungseinrichtung nach Anspruch 1 und 2, dadurch gekennzeichnet, daß ein vorderes Schneidwerk (23) an der Vorderseite und ein Seitenmesser (38) an einer Außenseite oder jeweils an den Außenseiten je ein Seitenmesser (38) vorgesehen ist, wobei das vordere Schneidwerk mit seinem Traggestell (24) in seinem Führungsrahmen (26) auf- und abfahrbar ist und dieser im Halterahmen (36) über eine Kurbel (31) entsprechend der erforderlichen Hin- und Herbewegung der Messer angetrieben und auf- und abfahrbar ist, was durch einen Hydrobeweger (27) erfolgen kann und daß die Seitenmesser (38) in Führungsschienen (39) horizontal beweglich gelagert sind und über eine Pleuelstange (41) und Kurbel (40) hin- und herbewegt werden und mittels seiner Rollenpaare (35) am Grundrahmen (36) über den Hydrobeweger (37) auf- und abgefahren werden kann.

8. Aufnahme- und Verteilungseinrichtung nach Anspruch 1 und 2, dadurch gekennzeichnet, daß die Klingen der Schneidwerkzeuge (8, 38) vorn spitz sind oder sägeartige Zähne (54) aufweisen.

Fig 1

Fig 2

0087588

1/3

Fig 3

Fig 4

Fig 5

*Fig 6*

*Fig 7*

Europäisches
Patentamt

**EUROPÄISCHER RECHERCHENBERICHT**

**0087588**
Nummer der Anmeldung

EP 83 10 0784

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl ³) |
|---|---|---|---|
| A | GB-A-1 551 006 (PROCAT (ENGINEERING) LTD.) * Seite 1, Zeilen 41-53; Seite 2, Zeilen 71-109; Figuren 1, 5 * | 1 | A 01 F 25/20 |
| A | DE-A-2 644 729 (B. STRAUTMANN) * Seite 4, letzter Absatz - Seite 5; Figur 1 * | 1,2 | |
| A | DE-U-8 016 985 (H. BLEINROTH) * Seite 5, letzter Absatz - Seite 6, vorletzter Absatz; Figuren 1-4 * | 1,6-8 | |
| A | DE-A-2 712 204 (B. STRAUTMANN) * Seite 7, letzter Absatz - Seite 8; Figuren 1, 2 * | 1,6 | **RECHERCHIERTE SACHGEBIETE (Int. Cl. ³)** |
| A | DE-A-2 142 163 (W. TEEBKEN) * Seite 4, Zeilen 18-20; Figuren 1, 2 * | 3,8 | A 01 F 25/20 A 01 F 29/00 A 01 K 5/02 |

Der vorliegende Recherchenbericht wurde für alle Patentansprüche erstellt.

| Recherchenort BERLIN | Abschlußdatum der Recherche 10-06-1983 | Prüfer SCHOFER G |
|---|---|---|